(19)

**Europäisches Patentamt**

**European Patent Office**

**Office européen des brevets**

(11) **EP 4 730 787 A1**

(12) **EUROPEAN PATENT APPLICATION**

(43) Date of publication:
**22.04.2026 Bulletin 2026/17**

(21) Application number: **24306711.3**

(22) Date of filing: **16.10.2024**

(51) International Patent Classification (IPC):
*H04N 19/119* (2014.01)   *H04N 19/176* (2014.01)
*H04N 19/51* (2014.01)   *H04N 19/593* (2014.01)

(52) Cooperative Patent Classification (CPC):
**H04N 19/176; H04N 19/119; H04N 19/51;**
**H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BORDES, Philippe**
  **35890 LAILLE (FR)**
• **NASER, Karam**
  **35250 MOUAZE (FR)**
• **ROBERT, Antoine**
  **35140 MEZIERES SUR COUESNON (FR)**
• **LE LEANNEC, Fabrice**
  **35830 BETTON (FR)**

(74) Representative: **Vossius & Partner**
**Patentanwälte Rechtsanwälte mbB**
**Siebertstraße 3**
**81675 München (DE)**

(54) **DUAL MERGE WITH REGRESSION-BASED GPM PARTITIONING**

(57) Systems, methods, and instrumentalities for dual merge with regression-based geometric partitioning mode partitioning. An example device may determine a first dual-merge candidate and a second dual-merge candidate. The device may determine a first prediction of a current block based on the first dual-merge candidate, and a second prediction of the current block based on the second dual-merge candidate. The first prediction may include a first set of samples. The second prediction may include a second set of samples. The device may apply a first weight to the first prediction and apply a second weight to the second prediction. The first weight may vary based on the position of samples in the first set of samples. The second weight may vary based on the position of samples in the second set of samples. The device may decode the current block based on the weighted first prediction and the weighted second prediction.

**FIG. 10**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for dual merge with regression-based geometric partitioning mode (RGPM) partitioning. An example device may determine a set of dual-merge candidates. The set of dual-merge candidates may include a first dual-merge candidate and a second dual-merge candidate. The device may determine a first prediction of a current block based on the first dual-merge candidate. The first prediction may include a first set of samples. The device may determine a second prediction of the current block based on the second dual-merge candidate. The second prediction may include a second set of samples. The device may apply a first weight to the first prediction. The first weight may vary based on the position of samples in the first set of samples. The device may apply a second weight to the second prediction. The second weight may vary based on the position of samples in the second set of samples. The device may decode the current block based on the weighted first prediction and the weighted second prediction.

The first weight and the second weight may be RGPM weights. The device may calculate a first template cost associated with using RGPM weights and a second template cost associated with using non-RGPM weights. The device may determine to use the first weight and the second weight based on the first cost being less than the second cost.

The first weight and the second weight may be RGPM weights. The device may calculate a first template cost associated with using RGPM weights and a second template cost associated with using non-RGPM weights. The device may multiply the first template cost by a scaling factor. The device may determine to use the first weight and the second weight based on the scaled first cost being less than the second cost. The device may derive the first weight and the second weight via an RGPM process.

The device may receive an indication that RGPM is enabled for the current block. The device may determine to include RGPM candidates in the set of dual-merge candidates based on the indication. The set of dual-merge candidates may include RGPM candidates and non-RGPM candidates.

The device may receive an indication to use RGPM candidates. The device may decode the current block based on the weighted first prediction and the weighted second prediction based on the indication.

The device may derive a first combined prediction based on the weighted first prediction, a weighted second prediction. The device may derive a second combined prediction based on a third prediction and a fourth prediction. The device may determine a first cost associated with the first combined prediction, and a second cost associated with the second combined prediction. The device may select the first combined prediction based on the first cost being less than the second cost. The device may decode the current block based on the combined prediction.

An example method may involve determining a set of dual-merge candidates. The set of dual-merge candidates may include a first dual-merge candidate and a second dual-merge candidate. The method may involve determining a first prediction of a current block based on the first dual-merge candidate. The first prediction may include a first set of samples. The method may involve determining a second prediction of the current block based on the second dual-merge candidate. The second prediction may include a second set of samples. The method may involve applying a first weight to the first prediction. The first weight may vary based on the position of samples in the first set of samples. The method may involve applying a second weight to the second prediction. The second weight may vary based on the position of samples in the second set of samples. The method may involve decoding the current block based on the weighted first prediction and the weighted second prediction.

The first weight and the second weight may be regression-based geometric partitioning mode (RGPM) weights. The method may involve calculating a first template cost associated with using RGPM weights and a second template cost associated with using non-RGPM weights. The method may involve determining to use the first weight and the second weight based on the first cost being less than the second cost.

The method may involve calculating a first template cost associated with using RGPM weights and a second template cost associated with using non-RGPM weights. The method may involve multiplying the first template cost by a scaling factor. The method may involve determining to use the first weight and the second weight based on the scaled first cost being less than the second cost. The method may involve deriving the first weight and the second weight via an RGPM process.

The method may involve receiving an indication that a regression-based geometric partitioning mode (RGPM) is enabled for the current block. Determining the set of dual-merge candidates may involve determining to include RGPM candidates in the set of dual-merge candidates based on the indication. The set of dual-merge candidates may include RGPM candidates and non-RGPM candidates.

The method may involve receiving an indication to use regression-based geometric partitioning mode (RGPM) candidates. Decoding the current block based on the weighted first prediction and the weighted second prediction may involve decoding the current block based on the weighted first prediction and the weighted second prediction based on the indication.

Decoding the current block based on the weighted first prediction and the weighted second prediction may involve deriving a first combined prediction based on the weighted first prediction, a weighted second prediction. Decoding the current block based on the weighted first prediction and the weighted second prediction may involve deriving a second combined prediction based on a third prediction and a fourth prediction. Decoding the current block based on the weighted first prediction and the weighted second prediction may involve determining a first cost associated with the first combined prediction, and a second cost associated with the second combined prediction. Decoding the current block based on the weighted first prediction and the weighted second prediction may involve selecting the first combined prediction based on the first cost being less than the second cost. Decoding the current block based on the weighted first prediction and the weighted second prediction may involve decoding the current block based on the combined prediction.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 shows an example quantized angle parameter $\phi i$ (left) and quantized offset parameter $\rho i$ (right).

FIG. 5 shows an example of the 64 supported geometric partitioning mode (GPM) partitioning modes grouped by angle index i.

FIG. 6 shows example ramp function for the weights for GPM blending.

FIG. 7 shows an example Z-scan of the regular GPM inter candidates list.

FIG. 8 shows an example prediction process for the dual merge mode.

FIG. 9 shows another example prediction process for the dual merge mode.

FIG. 10 shows an example improved prediction process for the dual merge mode.

FIG. 11 shows an example fallback mode if regression-based GPM (RGPM) fails.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

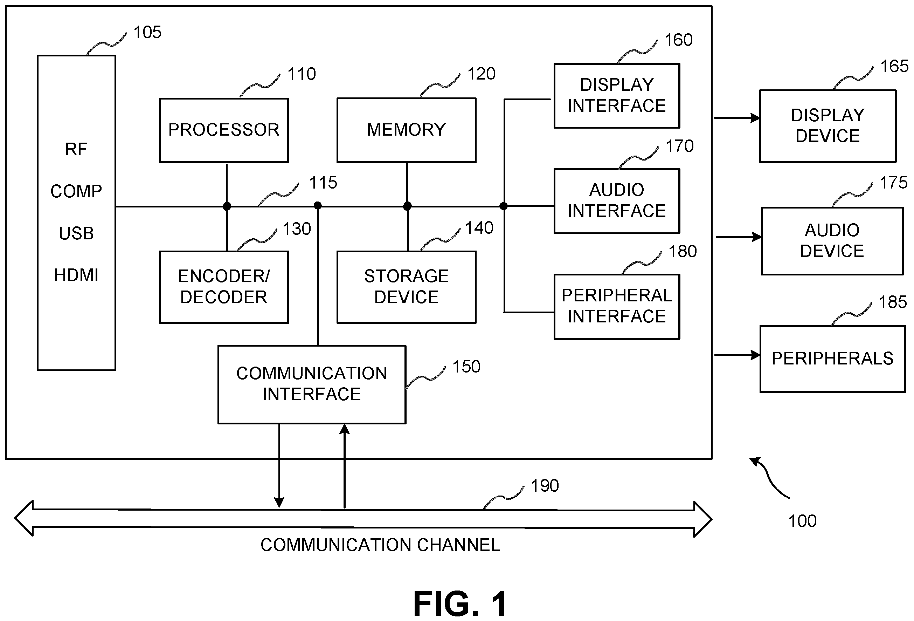

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

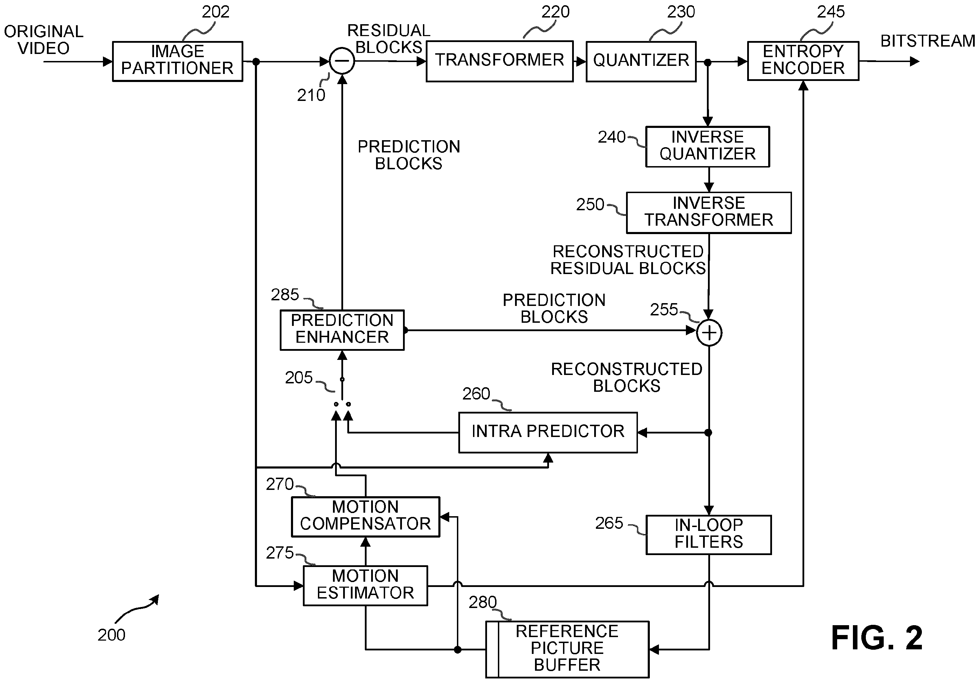

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

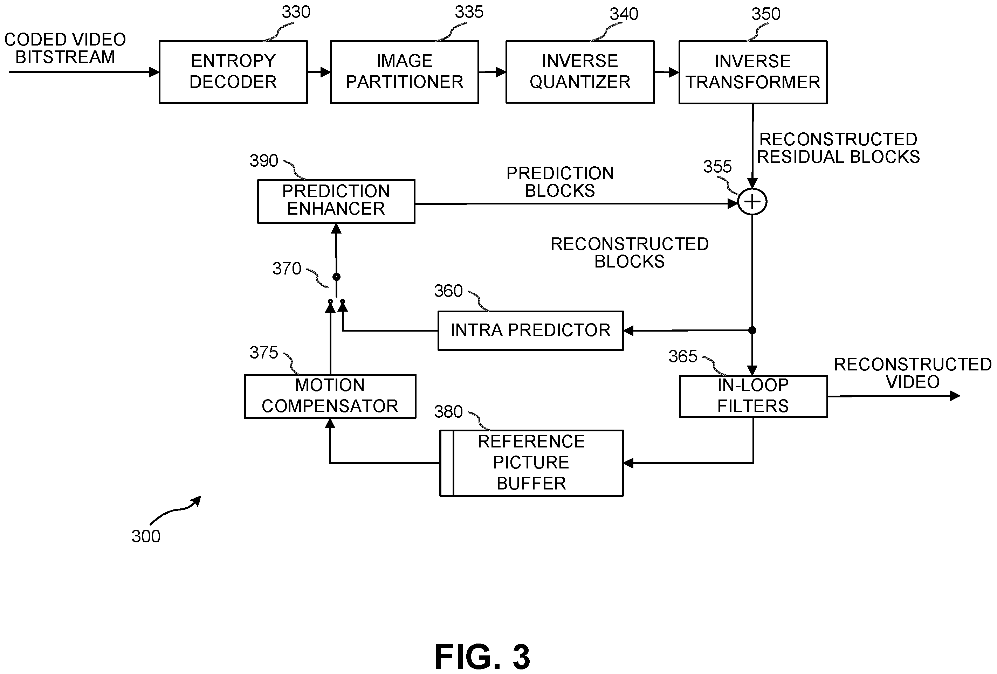

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr)*.

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) associated with geometry partition mode (GPM) partitioning are provided herein.

The geometry partition mode (GPM) may be signaled (e.g., in merge mode) to use non-rectangular and asymmetric rectangular partitioning (e.g., where each partition is uni-directional). The location of the partitioning boundary may be defined (e.g., mathematically defined) by an angle parameter $\phi$ and an offset parameter $\rho$. These parameters may be quantized and combined into a GPM partitioning index lookup table (e.g., of 64 entries).

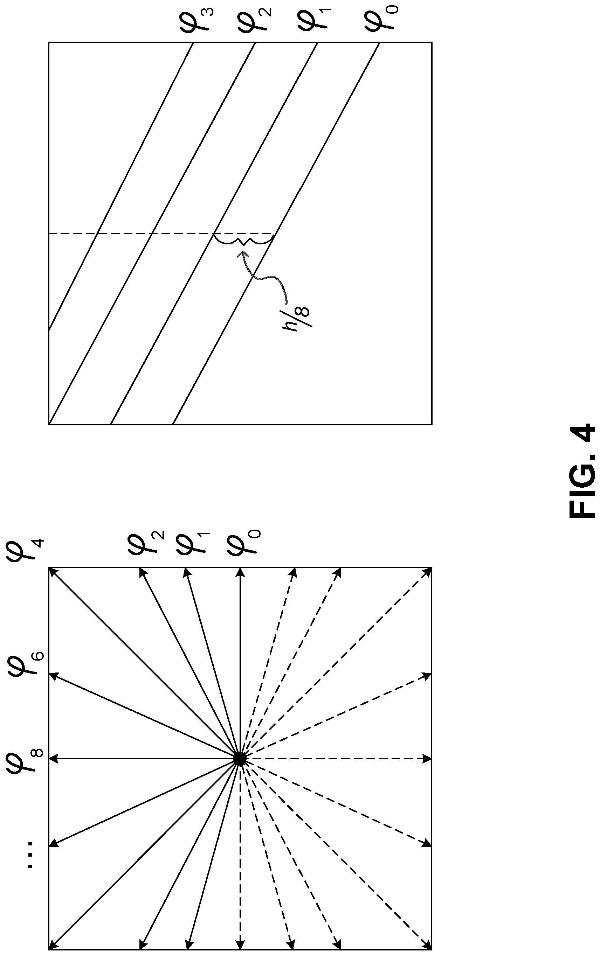

FIG. 4 illustrates example quantized angle parameter $\phi i$ (left) and quantized offset parameter $\rho i$ (right).

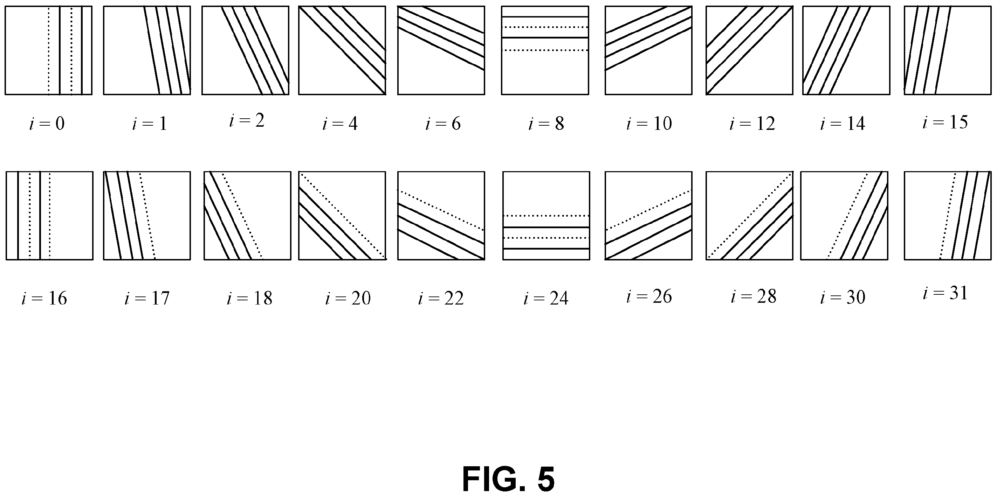

FIG. 5 illustrates visualized examples of the supported GPM partitioning modes (e.g., the 64 supported GPM partitioning modes) grouped by angle index (e.g., identical angle index i). The offset indices j (e.g., in each subfigure) may vary in the range of {0 ... 3}. The removed redundant quantized offsets are illustrated by dotted lines.

GPM motion vector difference (GPM-MMVD) may be signaled to adjust the selected motion vector values.

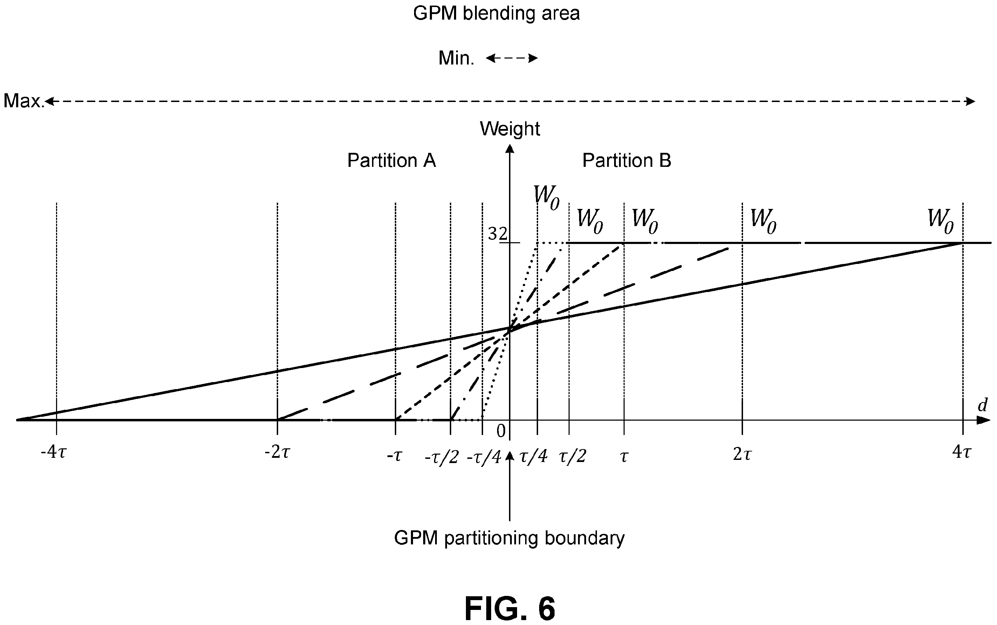

Adaptive blending may be implemented (e.g., at 1/32 precision) to smooth the transition between the two predictions near the split frontier (e.g., as depicted in FIG. 6). A CU level index may be coded to signal the selected blending area size (e.g., among up to 5, for example, where T equals 8 samples).

FIG. 6 illustrates an example ramp function for the weights for GPM blending (e.g., based on the displacement (d) from a predicted sample position to the GPM partitioning boundary and the blending area size ($\tau$)).

The GPM split mode candidates may be re-ordered (e.g., based on template matching). Given the motion information of each partition, a split edge candidate (e.g., each split edge candidate) may be extended into the reference templates. The TM cost of a split edge candidate (e.g., each split edge candidate) may be evaluated to re-order the split modes (e.g., the best 32 split modes) as available split modes. The index of the best split mode may be signaled.

Each partition may be bi-predicted. Bi-directional optical flow (BDOF) based motion vector refinement may be used when generating motion compensated prediction samples. GPM may be extended to enable affine motion compensation (AMC).

Feature(s) associated with regression-based GPM partitioning (e.g., RGPM-TM) are provided herein

The regression-based GPM (RGPM) may improve GPM (e.g., by allowing higher flexibility in the definition of the splitting line positions, directions, and the blending area). These parameters (e.g., all these parameters, sometimes referred to as PAR) may be derived (e.g., implicitly derived) from the template (TM) (e.g., so that the signaling is reduced).

In GPM, the final prediction samples may be generated by blending the two prediction signals (e.g., using a weighted average). Integer blending matrices (e.g., two integer blending matrices (W0 and W1)) may be built. The weights in the GPM blending matrices may be derived from the area size parameter based on the displacement from a predicted sample position to the GPM partitioning boundary (e.g., as shown in FIG. 6). RGPM may model the blending matrices as an affine linear function of the sample positions (x, y) in the current CU, for example:

$$W0(x,y) = a * x + b * y + c \ and \ W1(x,y) = 1 - W0(x,y)$$

This model design may cause the weights with same values to be distributed along a line (e.g., similarly to the blend area of GPM). The parameters (a, b, c) may be derived from the TM (e.g., using a regression-based algorithm minimizing the MSE (cost) between the weighted predictions and the reconstructed samples in the template). A "gpm-blend-flag" may be encoded to indicate whether GPM uses RGPM or the regular GPM blending. The RGPM model may be a polynomial function and/or use cross component $x^n.y^m$ terms, for example:

$$w(x,y) = a_0 * x + a_1 * x^2 + a_2 * y + a_3 * y^2 + b$$

$$w(x,y) = a_0 * x + a_1 * y + a_3 * x * y + b$$

$$w(x,y) = a_0 * x + a_1 * x^2 + a_2 * y + a_3 * y^2 + a_4 * x * y + b$$

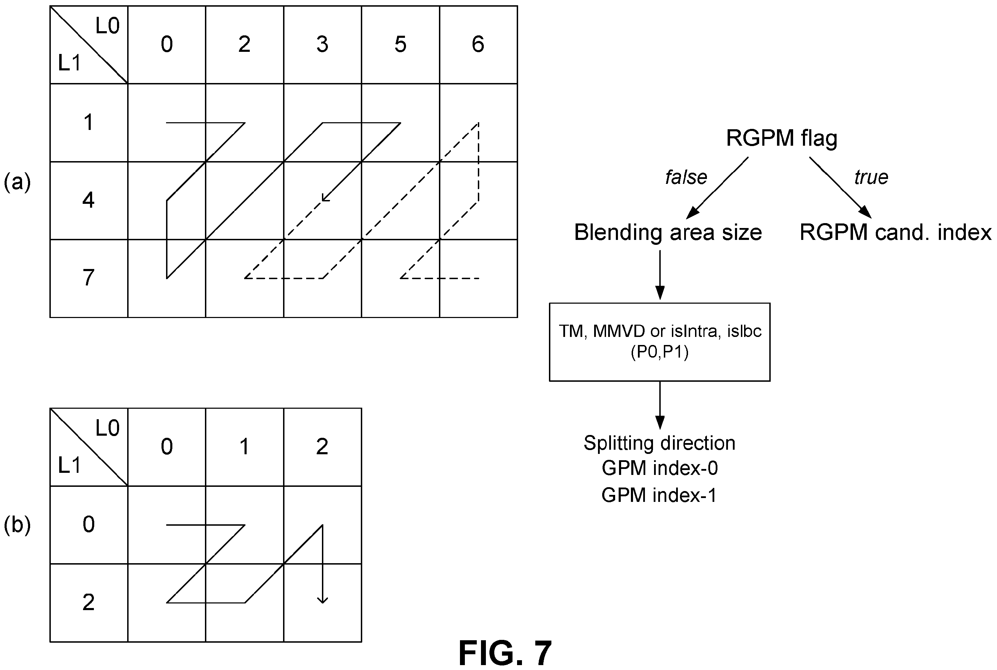

A list (e.g., a single list) of pairs of candidates may be built from the GPM candidates (e.g., regular GPM candidates). The candidates may be re-ordered with the template cost. The list may be built as a Z-scan of the regular GPM inter candidates list. The size of the list may be less than or equal to the regular number of GPM candidates. The order of the merge candidate indices in the pairs may not be considered (e.g., because of the matrix weights derivation process). Scanning may be performed so that the first index is less than to the second index. A pair of uni-directional candidates may have the same reference list index (e.g., as depicted in the examples (a) and (b) of FIG. 7 (left), respectively).

FIG. 7 illustrates an example Z-scan of the regular GPM inter candidates list (left) and signaling of RGPM (right).

Feature(s) associated with RGPM without using template (RGPM-noTM) are provided herein.

The parameters (PAR) may be derived from the samples of the two predictions P0 and P1 of the current block samples B (e.g., not from the (reconstructed) samples of the template TM). In this case, the similarities/differences between PC and P1 may be used to derive the spatially varying weights. A parameter "rgpm_target_index" may be coded to indicate whether P0 or P1 is used (e.g., if PC or P1 differs).

Feature(s) associated with dual-merge are provided herein.

one or more (e.g., multiple) merge modes may be supported (e.g. including subblock merge mode, geometric partition mode, template matching, adaptive decoder-side motion vector refinement, merge with MVD, and/or regular merge mode). In these merge modes, motion information (e.g., only one motion information) may be inherited from previous blocks. The motion information may include inter prediction direction, motion vectors, reference picture indices, BCW index, LIC parameters, MHP information, and/or the like.

The dual merge mode may inherit motion information (e.g., two motion information) from previous coded blocks. If the CU is coded in dual merge mode, a dual merge list may be constructed as follows. Dual merge candidates may be derived from spatial, temporal, non-adjacent spatial neighboring blocks, and HMVP (e.g., if the neighboring blocks are coded in the dual merge mode). If the dual merge list is not full, a regular merge list may be constructed (e.g., using a process similar to that of the regular merge mode). Candidates in the regular merge list may be paired and added to the dual merge list. The dual-merge candidates may be re-ordered using template cost (e.g., ARMC). A second pass re-ordering of the dual-merge candidates may be performed (e.g., to have better diversity).

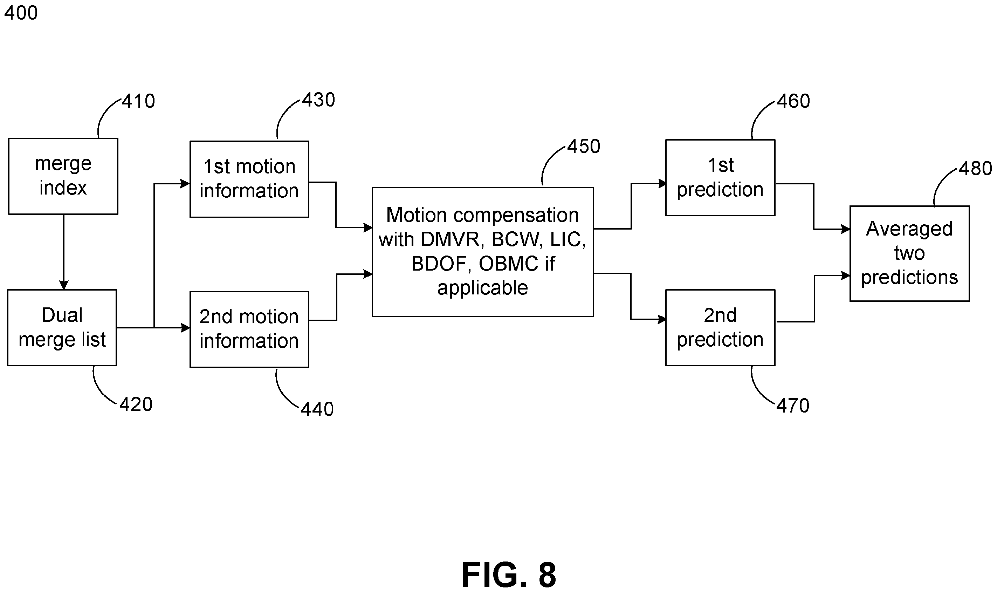

FIG. 8 illustrates an example prediction process (400) for the dual merge mode.

A (e.g., each) dual merge candidate (410) in the dual merge list (420) may have motion information (e.g., two motion information (430, 440)). The (e.g., each) motion information may be uni- or bi-predicted motion information. An index may be signaled to indicate which pair of dual merge candidates is selected. The (e.g., two) selected motion information may be used to generate (e.g., two) prediction blocks (e.g., using the same motion compensation process (450) as normal inter modes). For example, the (e.g., two) selected motion information may be refined (e.g., separately refined) by the DMVR (e.g., if the corresponding conditions are satisfied). Motion compensation (e.g., including BCW, LIC, BDOF, and/or OBMC processes) may be performed (450). The prediction blocks (e.g., two prediction blocks (460, 470)) may be averaged (480) to generate the final prediction for the CU. An illustration of prediction process for the dual merge mode is shown in FIG. 8. The MHP may not be applied to the dual merge mode. One or more (e.g., up to four) motions (e.g., num-cand = 4) may be used in the dual merge mode.

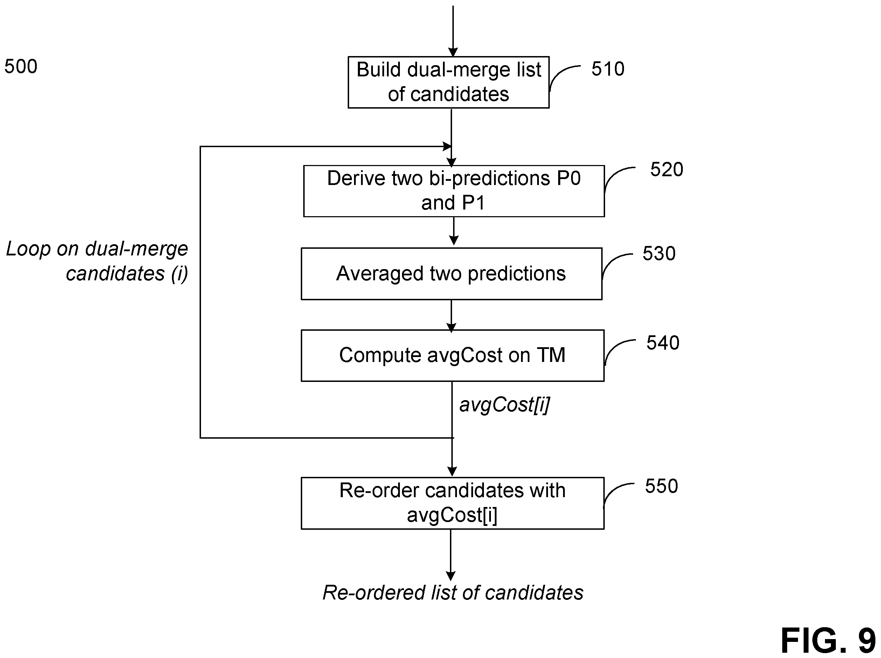

FIG. 9 illustrates an example process (500) for re-ordering the dual merge candidates with the template cost. The list of dual-merge candidates (510) may be built. For a (e.g., each) pair of candidates the motion compensation may be applied on the template (e.g., 1 line on top of current block and 1 column left to the current block). One or more (e.g., two) predictions (460, 470) of the template may be built (520) and averaged (530). The distortion "avgCost[i]" (e.g., SAD) between the template prediction (530) and the reconstructed samples may be calculated (540). The candidates may be re-ordered with lowest cost first (550). A second pass re-ordering (550) may be applied (e.g., to avoid having two consecutive candidates with similar costs, for example, diversity re-ordering).

Feature(s) associated with bi-prediction with CU-based weighting (BCW). The term "uniform" may mean constant. For example, uniform weights may have the same value for all samples (e.g., regardless of the sample's position in the block).

The bi-prediction may use unequal uniform weights (e.g., average of two uni-directional predictions P1 and P2), for example:

$$p = w * P_1 + (1 - w) * P_2$$

where "w" may be { -0.25 ; 0.33 ; 0.5 ; 0.66 ; 1.25 }. The allowed weight values may be { 0.125, 0.33, 0.5 ; 0.66, 0.875, 0.25, 0.75 }. Uniform weighting may correspond to w = 0.5. Other values may be unequal weighting.

Regression-based geometry partitioning blending (RGPM) may refer to a method for deriving spatially varying (e.g., non-uniform) weights (e.g., RGPM-TM or RGPM-noTM).

The dual-merge mode may combine predictions (e.g., two bi-predictions), for example, by averaging. The prediction may be improved by using position-dependent bi-prediction blending (e.g., RGPM).

Dual-merge may be combined with regression-based GPM partitioning. For example, regression-based GPM blending may be used with dual-merge. A list (e.g., a single list of dual-merge candidates (e.g., signaling "use_gpm flag" with parity of the index candidate) may be used. An RGPM flag may be coded. A list (e.g., a single dual-merge list) of candidates may be used to select blending method with template cost. Pre-defined weightings may be used if the RGPM-TM or RGPM-noTM method fails.

Dual-merge may be combined with regression-based partitioning. Systems, methods, and instrumentalities are disclosed for dual merge with regression-based geometric partitioning mode (RGPM) partitioning. An example device may determine a set of dual-merge candidates. The set of dual-merge candidates may include a first dual-merge candidate and a second dual-merge candidate. The device may determine a first prediction of a current block based on the first dual-merge candidate. The first prediction may include a first set of samples. The device may determine a second prediction of the current block based on the second dual-merge candidate. The second prediction may include a second set of samples. The device may apply a first weight to the first prediction. The first weight may vary based on the position of samples in the first set of samples. The device may apply a second weight to the second prediction. The second weight may vary based on the position of samples in the second set of samples. The device may decode the current block based on the weighted first prediction and the weighted second prediction.

The first weight and the second weight may be RGPM weights. The device may calculate a first template cost associated with using RGPM weights and a second template cost associated with using non-RGPM weights. The device may determine to use the first weight and the second weight based on the first cost being less than the second cost.

The first weight and the second weight may be RGPM weights. The device may calculate a first template cost associated with using RGPM weights and a second template cost associated with using non-RGPM weights. The device may multiply the first template cost by a scaling factor. The device may determine to use the first weight and the second weight based on the scaled first cost being less than the second cost. The device may derive the first weight and the second weight via an RGPM process.

The device may receive an indication that RGPM is enabled for the current block. The device may determine to include RGPM candidates in the set of dual-merge candidates based on the indication. The set of dual-merge candidates may include RGPM candidates and non-RGPM candidates.

The device may receive an indication to use RGPM candidates. The device may decode the current block based on the weighted first prediction and the weighted second prediction based on the indication.

The device may derive a first combined prediction based on the weighted first prediction, a weighted second prediction. The device may derive a second combined prediction based on a third prediction and a fourth prediction. The device may determine a first cost associated with the first combined prediction, and a second cost associated with the second combined prediction. The device may select the first combined prediction based on the first cost being less than the second cost. The device may decode the current block based on the combined prediction.

An example method may involve determining a set of dual-merge candidates. The set of dual-merge candidates may include a first dual-merge candidate and a second dual-merge candidate. The method may involve determining a first prediction of a current block based on the first dual-merge candidate. The first prediction may include a first set of samples. The method may involve determining a second prediction of the current block based on the second dual-merge candidate. The second prediction may include a second set of samples. The method may involve applying a first weight to the first prediction. The first weight may vary based on the position of samples in the first set of samples. The method may involve applying a second weight to the second prediction. The second weight may vary based on the position of samples in the second set of samples. The method may involve decoding the current block based on the weighted first prediction and the weighted second prediction.

The first weight and the second weight may be regression-based geometric partitioning mode (RGPM) weights. The method may involve calculating a first template cost associated with using RGPM weights and a second template cost associated with using non-RGPM weights. The method may involve determining to use the first weight and the second weight based on the first cost being less than the second cost.

The method may involve calculating a first template cost associated with using RGPM weights and a second template cost associated with using non-RGPM weights. The method may involve multiplying the first template cost by a scaling factor. The method may involve determining to use the first weight and the second weight based on the scaled first cost being less than the second cost. The method may involve deriving the first weight and the second weight via an RGPM process.

The method may involve receiving an indication that a regression-based geometric partitioning mode (RGPM) is enabled for the current block. Determining the set of dual-merge candidates may involve determining to include RGPM candidates in the set of dual-merge candidates based on the indication. The set of dual-merge candidates may include RGPM candidates and non-RGPM candidates.

The method may involve receiving an indication to use regression-based geometric partitioning mode (RGPM) candidates. Decoding the current block based on the weighted first prediction and the weighted second prediction may involve decoding the current block based on the weighted first prediction and the weighted second prediction based on the indication.

Decoding the current block based on the weighted first prediction and the weighted second prediction may involve deriving a first combined prediction based on the weighted first prediction, a weighted second prediction. Decoding the current block based on the weighted first prediction and the weighted second prediction may involve deriving a second combined prediction based on a third prediction and a fourth prediction. Decoding the current block based on the weighted first prediction and the weighted second prediction may involve determining a first cost associated with the first combined prediction, and a second cost associated with the second combined prediction. Decoding the current block based on the weighted first prediction and the weighted second prediction may involve selecting the first combined prediction based on the first cost being less than the second cost. Decoding the current block based on the weighted first prediction and the weighted second prediction may involve decoding the current block based on the combined prediction.

In dual-merge mode, the list of candidates may include pairs of candidates (e.g., C0; C1). The final prediction P may be the average of the two predictions P0 and P1 (e.g., $P = (PC + P1)/2$). The final prediction may be the weighted average of the two predictions P0 and P1 (e.g., $P = w0_*P0 + w1_*P1$). w0 and w1 may be fixed weight values (e.g., weight values < 1). The candidates C0 and/or C1 may be bi-prediction candidates.

The final prediction may be a spatial weighting of PC and P1 (e.g., $P(x) = w0(x)_*P0 + w1(x)_*P1$). The value of the weights wi(x) may vary with the value of the sample position "x = pos(x;y)" (e.g., x is the 2D vector position (x;y)) in the block. For example, the weights functions w0(x) and/or w1(x) may be derived with an RGPM. As used herein, RGPM may refer to any spatial weighting of PC and P1.

A (e.g., single) list of dual-merge candidates may be used.

The list of dual-merge candidates may include candidates with weights computed with RGPM or with fixed weights (e.g., weights not varying spatially). The indices of the RGPM (and fixed weight) candidates may be the order positions of the candidates in the list. The positions of the RGPM (or fixed weight) candidates in the list may be pre-determined. For example, the RGPM candidates may have odd (or even) index values. The non-RGPM candidates may have even (or odd) index values. In another example, the non-RGPM candidates may be listed first. In this case, the RGPM candidates may be listed second. In another example, unequal uniform weights may have even (or odd) index values. Equal uniform weights may have odd (or even) index values.

The non-RGPM candidates and RGPM candidates (or un-equal uniform weights candidates and equal uniform weights candidates) may have been re-ordered independently (e.g., with ARMC and/or diversity re-ordering).

If RGPM may be enabled/disabled at the slice or sequence level. The maximum number of dual-merge candidates may be increased (e.g., if RGPM is enabled with dual-merge mode. For example, the list size may be increased to two times the list size with RGPM disabled).

An RGPM flag may be coded. If a block is coded in dual-merge mode, an "rgpm_flag" may be coded to indicate whether RGPM or non-RGPM is used to build the final prediction.

One or more dual-merge candidates lists may be built. For example, two dual-merge candidate lists may be built with candidates using RGPM and non-RGPM, respectively. The two lists may have been re-ordered (e.g., independently, for example, with ARMC). The maximum number of candidates in a (e.g., each) list may be the same or different.

The "rgpm_flag" may be coded first (e.g., before the merge candidate index). The entropy coding (e.g., CABAC) context of "rgpm_flag" may be the same as the entropy coding context of "gpm-blend-flag".

An "rgpm-index" may be coded (e.g., in addition to dual-merge and/or any RGPM method). For example, an "rgpm_index" may be coded using the following semantics. rgpm_index = 0 may indicate average uniform weights and rgpm index = 1 may indicate spatially varying weights). rgpm_index = 0 may indicate average uniform weights and rgpm index > 0 may indicate unequal uniform weights. rgpm_index = 0 may indicate average uniform weights, rgpm index = 1 may indicate spatially varying weights, and rgpm index > 1 may indicate unequal uniform weights.

RGPM may be selected based on template cost.

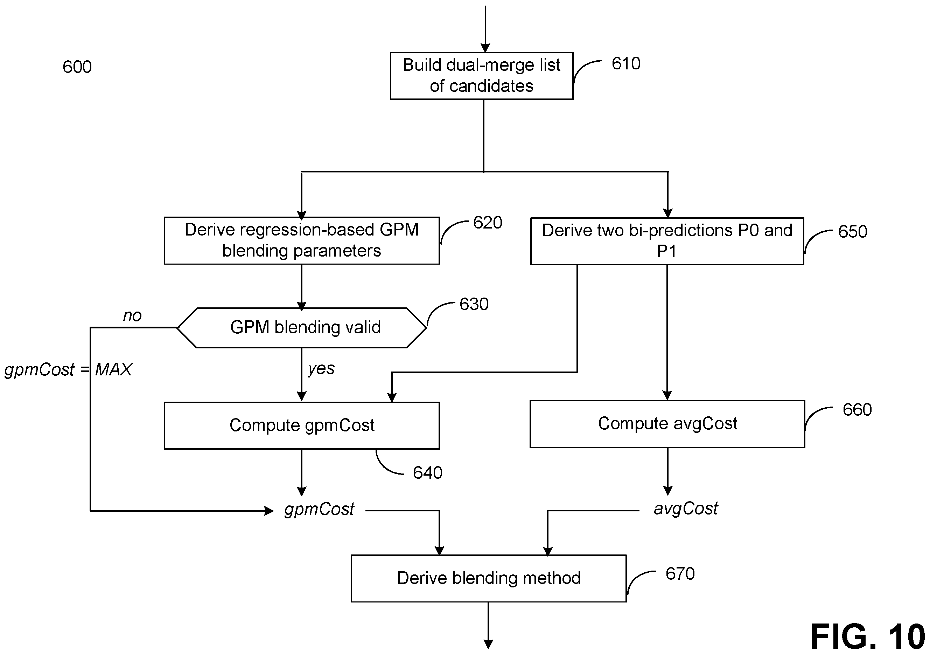

FIG. 10 illustrates an example prediction process (600) for the dual merge mode.

If RGPM-TM is used, the list of dual-merge candidates may by derived (610). RGPM blending parameters may be derived (620). The device may determine whether GPM blending is valid (630). The template cost using the RGPM method (e.g., gpmCost) may be calculated (640). Bi-predictions (e.g., two bi-predictions P0 and P1) may be derived (650). The template cost using the non-RGPM method (e.g., avgCost) may be calculated (660).

For a candidate (e.g., each candidate), RGPM blending or non-RGPM blending may be selected based on the template cost (670). If the template cost using the RGPM method (e.g., gpmCost) is less than the template cost using the non-RGPM method (e.g., avgCost), the RGPM method may be used with that candidate. If the template cost using the non-RGPM method (e.g., avgCost) is less than the template cost using the RGPM method (e.g., gpmCost), the non-RGPM method may be used with that candidate.

If { gpmCost x thres < avgCost }, the RGPM method may be used with the candidate. If { gpmCost x thres > avgCost}, the non-RGPM method may be used with the candidate. "thres" may be a pre-determined scaling value.

If RGPM is not applicable or if the RGPM method fails (e.g., regression-based does not converge or the spatial weights variance is too small/high, etc.), the RGPM method may be invalid (630). In this case, the non-RGPM blending method may be used (e.g., gpmCost set to MAX_COST).

If at least one (or both) of the dual-merge pair candidates has a bi-prediction weighted average index (BCW) equal to one of pre-determined set of values (e.g., BCW default weight), the RGPM method may be invalid (630). If { gpmCost x thres > avgCost}, the RGPM method may be invalid (630). "thres" may be a pre-determined scaling value (e.g., thres = 1 or 2). If the size of the block is above (and/or below) a pre-determined value, the RGPM method may be invalid (630).

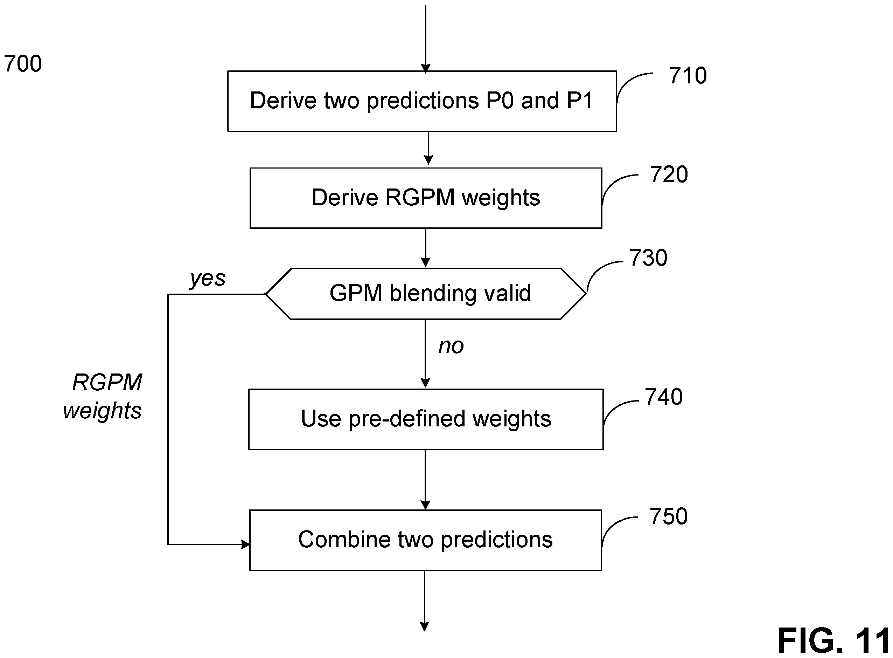

FIG. 11 shows an example fallback mode (700) if regression-based GPM (RGPM) fails. Pre-defined weightings may be used if the RGPM-noTM method fails.

Bi-predictions (e.g., two bi-predictions P0 and P1) may be derived (710). RGPM weights may be derived (720). The device may determine whether GPM blending is valid (730).

If dual-merge uses RGPM-noTM method, an "rgpm_flag" or "rgpm_index", and "rgpm_target_index" may be signaled. If the RGPM method fails (730) (e.g., if the use of equal uniform weight is signaled with "rgpm_flag = 0" or "rgpm index = 0"), the value of "rgpm_target_index" may be used to determine the pre-defined unequal uniform weights (740). For example, if the RGPM method fails, rgpm_target_index = 0 may indicate to use unequal weights {w0 = 0.25, w1 = 0.75 }. rgpm_target_index = 1 may indicate to use unequal weights { w0 = 0.75, w1 = 0.25 }. The predictions (e.g., two predictions) may be combined (750) based on the determined weights.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.

    ii. HTTP live Streaming (HLS) manifest transmitted over HTTP.

    iii. DASH MPD descriptors, for example as used in DASH and transmitted over HTTP.

    iv. RTP header extensions, for example as used during RTP streaming.

    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device comprising a processor configured to:

   determine a set of dual-merge candidates, wherein the set of dual-merge candidates comprises a first dual-merge candidate and a second dual-merge candidate;
   determine a first prediction of a current block based on the first dual-merge candidate, wherein the first prediction comprises a first set of samples;
   determine a second prediction of the current block based on the second dual-merge candidate, wherein the second prediction comprises a second set of samples;
   apply a first weight to the first prediction, wherein the first weight varies based on the position of samples in the first set of samples;
   apply a second weight to the second prediction, wherein the second weight varies based on the position of samples in the second set of samples; and
   decode the current block based on the weighted first prediction and the weighted second prediction.

2. The device of claim 1, wherein the first weight and the second weight are regression-based geometric partitioning mode (RGPM) weights, and the processor is further configured to:

   calculate a first template cost associated with using RGPM weights and a second template cost associated with using non-RGPM weights; and
   determine to use the first weight and the second weight based on the first cost being less than the second cost.

3. The device of claim 1 or 2, wherein the first weight and the second weight are regression-based geometric partitioning mode (RGPM) weights, and the processor is further configured to:

   calculate a first template cost associated with using RGPM weights and a second template cost associated with using non-RGPM weights;
   multiply the first template cost by a scaling factor; and
   determine to use the first weight and the second weight based on the scaled first cost being less than the second cost.

4. The device of any one of claims 1-3, wherein the processor is further configured to derive the first weight and the second weight via a regression-based geometric partitioning mode (RGPM) process.

5. The device of any one of claims 1-4, wherein the processor is further configured to receive an indication that a regression-based geometric partitioning mode (RGPM) is enabled for the current block, and the processor being configured to determine the set of dual-merge candidates comprises the processor being configured to determine to include RGPM candidates in the set of dual-merge candidates based on the indication.

6. The device of any one of claims 1-5, wherein the set of dual-merge candidates comprises regression-based geometric partitioning mode (RGPM) candidates and non-RGPM candidates.

7. The device of any one of claims 1-6, wherein the processor is further configured to receive an indication to use regression-based geometric partitioning mode (RGPM) candidates, and the processor being configured to decode the current block based on the weighted first prediction and the weighted second prediction comprises the processor being configured to decode the current block based on the weighted first prediction and the weighted second prediction based on the indication.

8. The device of any one of claims 1-7, wherein the processor being configured to decode the current block based on the weighted first prediction and the weighted second prediction comprises the processor being configured to:

derive a first combined prediction based on the weighted first prediction, a weighted second prediction;
derive a second combined prediction based on a third prediction and a fourth prediction;
determine a first cost associated with the first combined prediction, and a second cost associated with the second combined prediction;
select the first combined prediction based on the first cost being less than the second cost; and
decode the current block based on the combined prediction.

9. A method comprising:

determining a set of dual-merge candidates, wherein the set of dual-merge candidates comprises a first dual-merge candidate and a second dual-merge candidate;
determining a first prediction of a current block based on the first dual-merge candidate, wherein the first prediction comprises a first set of samples;
determining a second prediction of the current block based on the second dual-merge candidate, wherein the second prediction comprises a second set of samples;
applying a first weight to the first prediction, wherein the first weight varies based on the position of samples in the first set of samples;
applying a second weight to the second prediction, wherein the second weight varies based on the position of samples in the second set of samples; and
decoding the current block based on the weighted first prediction and the weighted second prediction.

10. The method of claim 9, wherein the first weight and the second weight are regression-based geometric partitioning mode (RGPM) weights, and the method further comprises:

calculating a first template cost associated with using RGPM weights and a second template cost associated with using non-RGPM weights; and
determining to use the first weight and the second weight based on the first cost being less than the second cost.

11. The method of claim 9 or 10, wherein the first weight and the second weight are regression-based geometric partitioning mode (RGPM) weights, and the method further comprises:

calculating a first template cost associated with using RGPM weights and a second template cost associated with using non-RGPM weights;
multiplying the first template cost by a scaling factor; and
determining to use the first weight and the second weight based on the scaled first cost being less than the second cost.

12. The method of any one of claims 9-11, wherein the method further comprises deriving the first weight and the second weight via a regression-based geometric partitioning mode (RGPM) process.

13. The method of any one of claims 9-12, wherein the method further comprises receiving an indication that a regression-based geometric partitioning mode (RGPM) is enabled for the current block, and determining the set of dual-merge candidates comprises determining to include RGPM candidates in the set of dual-merge candidates based on the indication.

14. The method of any one of claims 9-13, wherein the set of dual-merge candidates comprises regression-based geometric partitioning mode (RGPM) candidates and non-RGPM candidates.

15. The method of any one of claims 9-14, wherein the method further comprises receiving an indication to use regression-based geometric partitioning mode (RGPM) candidates, and decoding the current block based on the weighted first prediction and the weighted second prediction comprises decoding the current block based on the weighted first prediction and the weighted second prediction based on the indication.

FIG. 1

100

105 — RF / COMP / USB / HDMI

110 — PROCESSOR

115

120 — MEMORY

130 — ENCODER/DECODER

140 — STORAGE DEVICE

150 — COMMUNICATION INTERFACE

160 — DISPLAY INTERFACE

170 — AUDIO INTERFACE

180 — PERIPHERAL INTERFACE

165 — DISPLAY DEVICE

175 — AUDIO DEVICE

185 — PERIPHERALS

190 — COMMUNICATION CHANNEL

FIG. 2

**FIG. 3**

FIG. 4

EP 4 730 787 A1

FIG. 5

EP 4 730 787 A1

**FIG. 6**

EP 4 730 787 A1

FIG. 7

400

**FIG. 8**

EP 4 730 787 A1

500

```
                    ┌─────────────────────┐
                    │ Build dual-merge list │──── 510
                    │   of candidates       │
                    └─────────────────────┘
                              │
                              ▼
                    ┌─────────────────────┐
                    │ Derive two bi-predictions P0 │──── 520
                    │      and P1           │
                    └─────────────────────┘
                              │
Loop on dual-merge            ▼
candidates (i)      ┌─────────────────────┐
                    │ Averaged two predictions │──── 530
                    └─────────────────────┘
                              │
                              ▼
                    ┌─────────────────────┐
                    │ Compute avgCost on TM │──── 540
                    └─────────────────────┘
                              │
                          avgCost[i]
                              │
                              ▼
                    ┌─────────────────────┐
                    │ Re-order candidates with │──── 550
                    │      avgCost[i]       │
                    └─────────────────────┘
                              │
                              ▼
                 Re-ordered list of candidates
```

**FIG. 9**

600

Build dual-merge list of candidates — 610

Derive regression-based GPM blending parameters — 620

Derive two bi-predictions P0 and P1 — 650

GPM blending valid — 630

no

yes

gpmCost = MAX

Compute gpmCost — 640

Compute avgCost — 660

gpmCost

avgCost

Derive blending method — 670

**FIG. 10**

700

```
          ┌──────────────────────────────────┐
          │  Derive two predictions P0 and P1 │── 710
          └──────────────────────────────────┘
                          │
                          ▼
              ┌────────────────────────┐
              │   Derive RGPM weights   │── 720
              └────────────────────────┘
                          │
          yes             ▼                    730
     ┌──────────<  GPM blending valid  >──┘
     │                    │
     │                   no
     │                    ▼
RGPM │          ┌────────────────────────┐
weights        │   Use pre-defined weights │── 740
     │          └────────────────────────┘
     │                    │
     │                    ▼
     │          ┌────────────────────────┐
     └─────────▶│  Combine two predictions │── 750
                └────────────────────────┘
                          │
                          ▼
```

**FIG. 11**

|  | Europäisches Patentamt<br>European Patent Office<br>Office européen des brevets | **EUROPEAN SEARCH REPORT** | **Application Number**<br><br>EP 24 30 6711 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | R-L LIAO (ALIBABA-INC) ET AL: "Non-EE2: A dual merge mode",<br>35. JVET MEETING; 20240712 - 20240719; SAPPORO; (THE JOINT VIDEO EXPLORATION TEAM OF ISO/IEC JTC1/SC29/WG11 AND ITU-T SG.16 ),<br>,<br>no. JVET-AI0109<br>14 July 2024 (2024-07-14), XP030320304,<br>Retrieved from the Internet:<br>URL:https://jvet-experts.org/doc_end_user/documents/35_Sapporo/wg11/JVET-AI0109-v2.zip JVET-AI0109-v2.docx<br>[retrieved on 2024-07-14]<br>* the whole document *<br>----- | 1-15 | INV.<br>H04N19/119<br>H04N19/176<br>H04N19/51<br>H04N19/593 |
| Y | BORDES (INTERDIGITAL) P ET AL: "Non-EE2: Regression-based GPM blending",<br>32. JVET MEETING; 20231013 - 20231020; HANNOVER; (THE JOINT VIDEO EXPLORATION TEAM OF ISO/IEC JTC1/SC29/WG11 AND ITU-T SG.16 ),<br>,<br>no. JVET-AF0118<br>6 October 2023 (2023-10-06), XP030312198,<br>Retrieved from the Internet:<br>URL:https://jvet-experts.org/doc_end_user/documents/32_Hannover/wg11/JVET-AF0118-v1.zip JVET-AF0118-v1.docx<br>[retrieved on 2023-10-06]<br>* the whole document *<br>-----<br>-/-- | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 28 March 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 24 30 6711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARCZEWICZ M ET AL: "JVET AHG report: Enhanced compression beyond VVC capability (AHG12)", 147. MPEG MEETING; 20240715 - 20240719; SAPPORO; (MOTION PICTURE EXPERT GROUP OR ISO/IEC JTC1/SC29/WG11), , no. m68517 10 July 2024 (2024-07-10), XP030321688, Retrieved from the Internet: URL:https://dms.mpeg.expert/doc_end_user/d ocuments/147_Sapporo/wg11/m68517-JVET-AI00 12-v1-JVET-AI0012-v1.zip JVET-AI0012-v1.docx [retrieved on 2024-07-10] * section 3.2; page 3 - page 4 * | 1-15 | |

-----

TECHNICAL FIELDS
SEARCHED (IPC)

The present search report has been drawn up for all claims

| Place of search | Date of completion of the search | Examiner |
|---|---|---|
| Munich | 28 March 2025 | Giuliani, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)